# EUROPEAN PATENT APPLICATION

(11) **EP 4 848 176 A1**
(43) Date of publication of application: **02.12.2026**
(21) Application number: 25180024.9
(22) Date of filing: 30.05.2025
(51) Int. Cl.: G06Q 10/087, B65G 1/137

(54) **A COMPUTER IMPLEMENTED METHOD OF MONITORING INVENTORY ITEMS**

(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a computer implemented method of monitoring inventory items stored within or removed from a stackable container of an automated storage and retrieval system, wherein the container comprises a reader installed on or within the container, the method comprising detecting, by the reader in wireless communication with one or more transponders affixed to respective inventory items, a transponder within a predetermined range indicating that an inventory item upon which the transponder is affixed is stored within the container, receiving, by the reader, inventory item data from the transponder, wherein the inventory item data is associated with the inventory item upon which the transponder is affixed, storing, by the reader, the inventory item data, and determining, by the reader, a number of inventory items stored within or removed from the container based on the indication that the inventory item is stored within the container.

## Description

### TECHNICAL FIELD

The disclosure relates to a computer implemented method of monitoring inventory items for an automated storage and retrieval system.

### BACKGROUND

An automated storage and retrieval system is a storage solution in which robots retrieve items from their logged location within a warehouse and deliver the items to a packing station or port. The system comprises a grid formed by vertical storage columns that are arranged to accommodate stacks of storage containers. The system is suitable carrying out a computer implemented method for monitoring inventory items.

### SUMMARY

Aspect(s) of the present disclosure are set out in the independent claim(s). Other aspects and features of the present disclosure are set out in the dependent claims and in the description below.

### BRIEF DESCRIPTION OF THE DRAWINGS

Implementations of the present disclosure are described below, by way of example, with reference to the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a flow diagram of a first example method of monitoring inventory items stored within or removed from a stackable container of an automated storage and retrieval system, such as the automated storage and retrieval system of Fig. 1;
Fig. 6 shows a flow diagram of a second example method based on the method of Fig. 5;
Fig. 7 shows a flow diagram of a third example method based on the method of Fig. 5;
Figs. 8A-8B show a stackable container for use within the methods of Figs. 5-7;
Figs. 9A-9C show a stackable container for use within the method of Fig. 6;
Figs. 10A-10B show an inventory item for use within the methods of Figs. 5-7;
Figs. 11A-11B show an inventory item for use within the method of Fig. 7; and
Fig. 12 shows a container-handling vehicle comprising a reader for use within the method of Fig. 7.

Like reference numerals are used for like components throughout the detailed description.

### DETAILED DESCRIPTION

In overview, the disclosure relates to a computer implemented method of monitoring inventory items stored within or removed from a stackable container of an automated storage and retrieval system. The container comprises a reader installed on or within the container. The reader is in wireless communication with one or more transponders affixed to respective inventory items and detects a transponder within a predetermined range from the reader indicating that an inventory item upon which the transponder is affixed is stored within or removed from the container. The reader receives and transmits the inventory item data from the transponder to a controller of the system. The inventory item data is associated with the inventory item upon which the transponder is affixed. Based on the inventory item data, the controller selects an action to process the inventory item upon which the transponder is affixed.

Traditional storage solutions usually involve the arrangement of goods on rows of shelves within a warehouse. The shelf location for each item is recorded in an inventory, and goods are retrieved from the shelves by a stock picker. The shelves are restocked, and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robotic container-handling vehicles retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

As described herein, the inventory item data may take any suitable form and may indicate, for instance, whether the inventory item has expired or is unusable based on different forms of inventory item data. The inventory item data may comprise identification data, date data, temporal data, and environmental condition data. Any combination of inventory item data may be used by the controller to select an action to process each inventory item. The controller may determine whether the inventory item data meets or does not meet certain threshold criterion. In response to this determination, the controller may select an action to dispose of or otherwise remove inventory items from the container or system. In other examples, the containers or inventory items may be transported to be inspected, emptied, washed, refilled, and/or replaced by a user.

Accordingly, the methods of the present disclosure provide inventory item monitoring to inform whether the inventory items are likely to have spoiled. Such monitoring can effectively and specifically identify whether inventory items across the storage system are likely to have spoiled, particularly compared to out-of-container environmental condition sensor monitoring (e.g., by an environmental condition sensor disposed in the warehouse) which may not be capable of identifying variations in environmental conditions across storage spaces of the storage system. As a step further, the present disclosure individually monitors each inventory item so that the system has a real-time overview of each inventory item within the system. The inventory items may be moved between different storage containers, but as each inventory item comprises a transponder, the system is informed of inventory item specific data. The containers each comprise readers to effectively and accurately monitor inventory item data for each inventory item within the system whenever inventory items are moved around.

The present methods can therefore can more accurately identify whether the goods stored in the storage space have been exposed to undesirable environmental conditions which might lead to their spoiling. Undesirable environmental conditions comprise environmental conditions giving rise to environmental condition data which meets a threshold criterion. Furthermore, monitoring the environmental condition of each inventory item vastly reduces a total number of containers for inspection or inventory items to dispose of to only those associated with undesirable environmental conditions instead of, for instance, all containers in a region of the storage system, thereby improving efficiency.

In addition and relating to some examples, inventory times (e.g., goods, merchandise, produce, products, etc.) are stored in the warehouse within containers. It is useful for logistics within the warehouse to know where specific inventory items are stored. It is also useful for logistics within the warehouse to manage the content of the containers. Known systems and methods are subject to human error when counting or monitoring the inventory items stored within or removed from containers. Inventory items may be incorrectly counted or may not be stored within a container where they are recorded.

The methods of the present disclosure may therefore provide monitoring of inventory items stored within or removed from a stackable container of an automated storage and retrieval system. A reader is installed on or within the container and a transponder is affixed to each inventory item. The reader can receive and store data to determine a number of inventory items stored within or removed from the container to manage the content of the containers. The reader does not require any external system to manage the content of the containers. The self-contained method counts inventory items stored within or removed from a self-powered, intelligent container. This is useful when containers are removed from the system to make deliveries, when inventory items within containers are inbounded into the system, or when containers are moved throughout the system or grid.

In some examples, the reader of the present disclosure hence detects transponders affixed to each inventory item, even if an inventory item is thought to have been stored within a or removed from a container, the container determines a correct number of inventory items stored within or removed from the container. For example, if an inventory item is quickly thrown near a container, the inventory item may fall to the ground. In this case, the reader detects that the transponder affixed to the inventory item is within a predetermined range from the reader indicating that an inventory item is removed from the container. The reader is also capable of detecting a plurality of transponders at once, resulting in an efficient method of monitoring inventory items stored within or removed from a stackable container.

One or more aspects of the invention of the present application are set out in the claims.

The present disclosure will now be described in general terms before implementations of the disclosure are described by way of example with reference to the drawings as an overview. The word "may" is used to refer to a feature that is optional, i.e. in some implementations of the disclosure, the feature is present, and in some implementations of the disclosure, the feature is not present. This overview is provided to introduce, in simplified form, a selection of concepts that are further described herein. The presence of a feature in this overview does not imply that the feature is essential to the disclosure.

The present disclosure relates to a method of monitoring inventory items stored within or removed from a stackable container of an automated storage and retrieval system, wherein the container comprises a reader installed on or within the container. The method comprises detecting, by the reader in wireless communication with one or more transponders affixed to respective inventory items, a transponder within a predetermined range from the reader indicating that an inventory item upon which the transponder is affixed is stored within or removed from the container. The method further comprises receiving, by the reader, inventory item data from the transponder, wherein the inventory item data is associated with the inventory item upon which the transponder is affixed.

The method further comprises transmitting, by the reader, the inventory item data to a controller of the automated storage and retrieval system.

The method further comprises selecting, by the controller, an action to process the inventory item upon which the transponder is affixed based on the inventory item data.

The method may comprise determining, by the controller, whether the inventory item data meets a threshold criterion.

The threshold criterion may comprise a first threshold criterion.

The first threshold criterion may have a first range.

The first range may comprise a lower bound having a first threshold value and an upper bound having a second threshold value.

The threshold criterion may further comprise a second threshold criterion.

The second threshold criterion may have a second range.

The second range may comprise a lower bound having a third threshold value and an upper bound having a fourth threshold value.

The selected action may comprise picking, for removal from the automated storage and retrieval system, the inventory item if the inventory item data meets the first threshold criterion.

The selected action may further comprise picking, for delivery from the automated storage and retrieval system, the inventory item if the inventory item data meets the second threshold criterion.

The selected action may further comprise picking, for delivery from the automated storage and retrieval system, the inventory item if the inventory item data does not meet the first threshold criterion or the second threshold criterion.

Inventory items having inventory item data that meets the second inventory item threshold criterion may be picked before inventory items having inventory item data that does not meet the first threshold criterion or the second threshold criterion.

The inventory item data may comprise static data.

The static data may comprise one or more of: identification data; and date data.

The static data may be received from the transponder when the inventory item is stored within the container.

The first threshold criterion may be a first date threshold criterion, the first date threshold criterion may have a first date range, the first and second threshold values may be first and second threshold dates, the first threshold date may be earlier than the second threshold date, and the first date threshold criterion may indicate that the date data is within the first date range.

The second threshold criterion may be a second date threshold criterion, the second date threshold criterion may have a second date range, the third and fourth threshold values may be third and fourth threshold dates, the third threshold date may be earlier than the fourth threshold date, and the second date threshold criterion indicates that the date data is beyond the first date range and within the second date range.

The second threshold date may be earlier than the third threshold date.

The inventory item data may comprise environmental condition data indicating an environmental condition.

The environmental condition may comprise one or more of a temperature of the container within which the inventory item is stored, a humidity of the container within which the inventory item is stored, a level of illumination of the container within which the inventory item is stored, and an atmospheric composition of the container within which the inventory item is stored.

The first threshold criterion may comprise a first environmental condition threshold criterion, the first range may comprise a first environmental condition range, the first and second threshold values may respectively comprise first and second threshold environmental condition values, and the first environmental condition threshold criterion may indicate that the environmental condition data is beyond the first environmental condition range.

The first threshold criterion may be a first environmental condition threshold criterion, the first environmental condition threshold criterion may have a first environmental condition range, the first and second threshold values may be first and second threshold environmental condition values, the first threshold environmental condition value may be less than the second threshold environmental condition value, and the first environmental condition threshold criterion may indicate that the environmental condition data is beyond the first environmental condition range.

The second threshold criterion may be a second environmental condition threshold criterion, the second environmental condition threshold criterion may have a second environmental condition range, the third and fourth threshold values may be third and fourth threshold environmental condition values, the third threshold environmental condition value may be less than the fourth threshold environmental condition value, and the second environmental condition threshold criterion may indicate that the environmental condition data is within the first environmental condition range and beyond the second environmental condition range.

The first threshold environmental condition value may be equal to or less than the third environmental condition threshold value and the fourth environmental condition threshold value may be less than the second environmental condition threshold value.

The first threshold environmental condition value may be less than the third threshold environmental condition value and the fourth threshold environmental condition value may be equal to or less than the second threshold environmental condition value.

The inventory item data may comprise temporal data.

The temporal data may indicate an amount of time that the inventory item is stored within a container.

The first environmental condition threshold criterion may be met when the environmental condition data is beyond the first environmental condition range for a predetermined amount of time based on the temporal data.

The second environmental condition threshold criterion may be met when the environmental condition data is within the first environmental condition range and beyond the second environmental condition range for a predetermined amount of time based on the temporal data.

At least one of the temporal data and the environmental data may be received from the transponder when the inventory item is removed from the container.

The transponder may be a radio-frequency identification (RFID) transponder within an RFID tag. The RFID tag may be an active RFID tag.

The reader may comprise an RFID reader.

The reader may comprise a power source to power the reader.

The reader may comprise an antenna to detect the transponder and receive inventory item data from the transponder.

The reader may comprise a wireless connection means to transmit the inventory item data to the controller.

The method may comprise storing, by the reader, the inventory item data.

The method may comprise determining, by the reader, a number of inventory items stored within or removed from the container based on the indication that the inventory item is stored within or removed from the container.

The reader may comprise a read-write memory to store the inventory item data.

To determine the number of inventory items stored within or removed from the container, the method may comprise counting, by a counter coupled to the reader, the number of inventory items stored within or removed from the container.

The counter may be coupled to the reader via the read-write memory.

To determine the number of inventory items stored within or removed from the container, the method may comprise counting, by the reader, the number of inventory items stored within or removed from the container.

When the detected transponder is within the predetermined range, the method may comprise increasing the number of inventory items stored within the container by 1, or decreasing the number of inventory items removed from the container by 1.

When the detected transponder has exceeded the predetermined range, the method may comprise decreasing the number of inventory items stored within the container by 1, or increasing the number of inventory items removed from the container by 1.

The RFID tag may be a passive RFID tag.

The method may comprise transmitting, by the reader, the number of inventory items stored within or removed from the container to a controller of the automated storage and retrieval system.

The reader may comprise a wireless connection means to transmit the number of inventory items stored within or removed from the container to the controller.

The reader or the transponder may be coupled to an environmental condition sensor.

The present disclosure relates to a computer-readable medium comprising instructions which, when executed by a processor of a computing system, cause the computing system to perform the method described herein.

The present disclosure relates to a computing system for controlling an automated storage and retrieval system, the computing system comprising one or more processors, and a memory in communication with the one or more processors, the memory storing instructions that when executed by the one or more processors cause the computing system to perform the method described herein.

The present disclosure relates to a stackable container for an automated storage and retrieval system. The container comprises a reader installed on or within the container. The reader is in wireless communication with one or more transponders affixed to respective inventory items and is configured to detect a transponder within a predetermined range from the reader indicating that an inventory item upon which the transponder is affixed is stored within or removed from the container. The reader is further configured to receive inventory item data from the transponder, wherein the inventory item data is associated with the inventory item upon which the transponder is affixed.

The reader is further configured to transmit the inventory item data to a controller of the automated storage and retrieval system. The controller is configured to select an action to process the inventory item upon which the transponder is affixed based on the inventory item data.

The reader may be configured to store the inventory item data. The reader may be configured to determine a number of inventory items stored within or removed from the container based on the indication that the inventory item is stored within or removed from the container.

The stackable container is arranged for use in the method described herein and may comprise any features related to or disclosed in relation to the method.

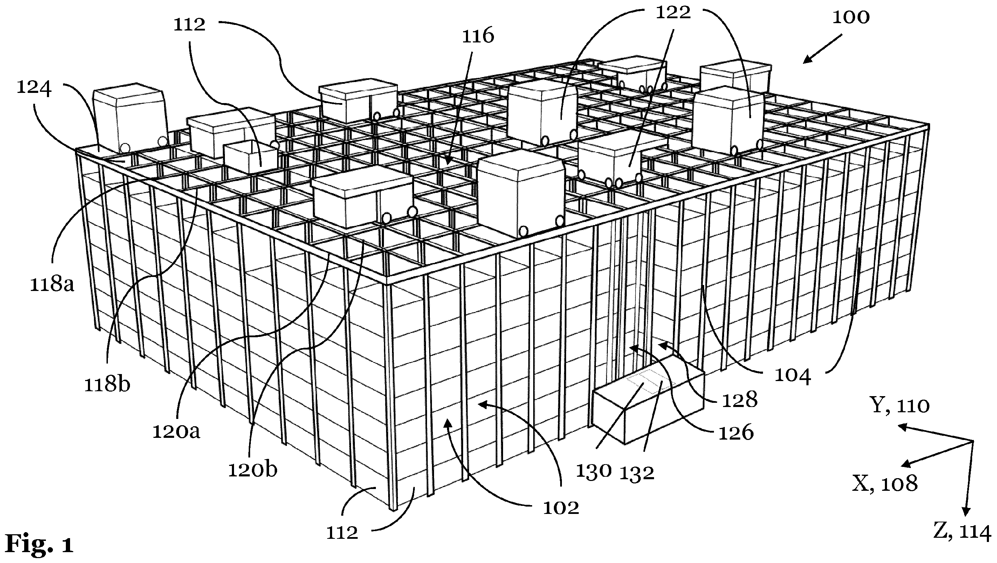

Referring to the example shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

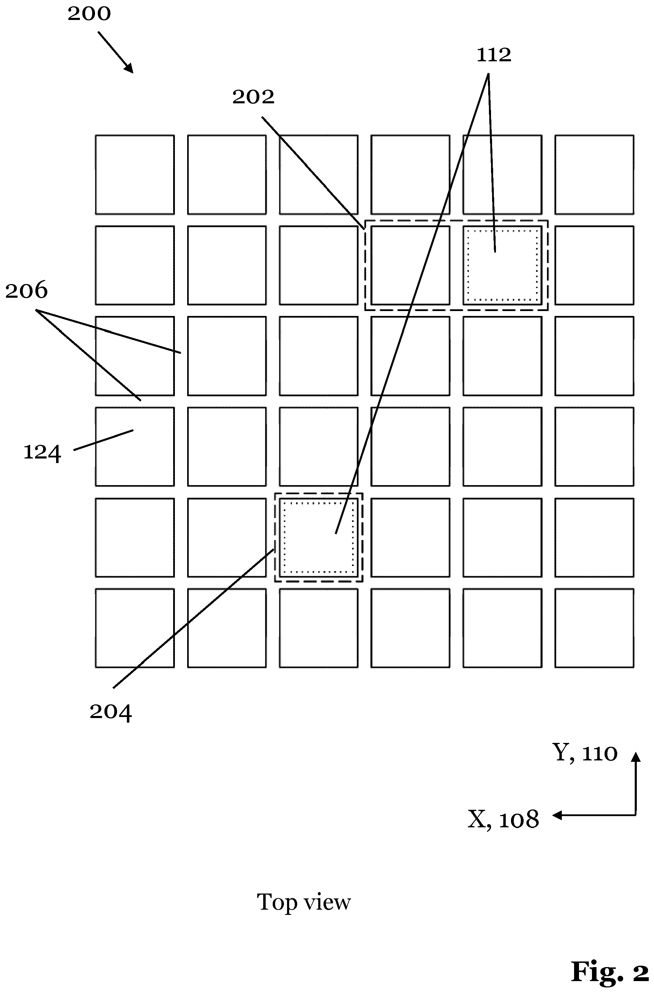

Referring to the example shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

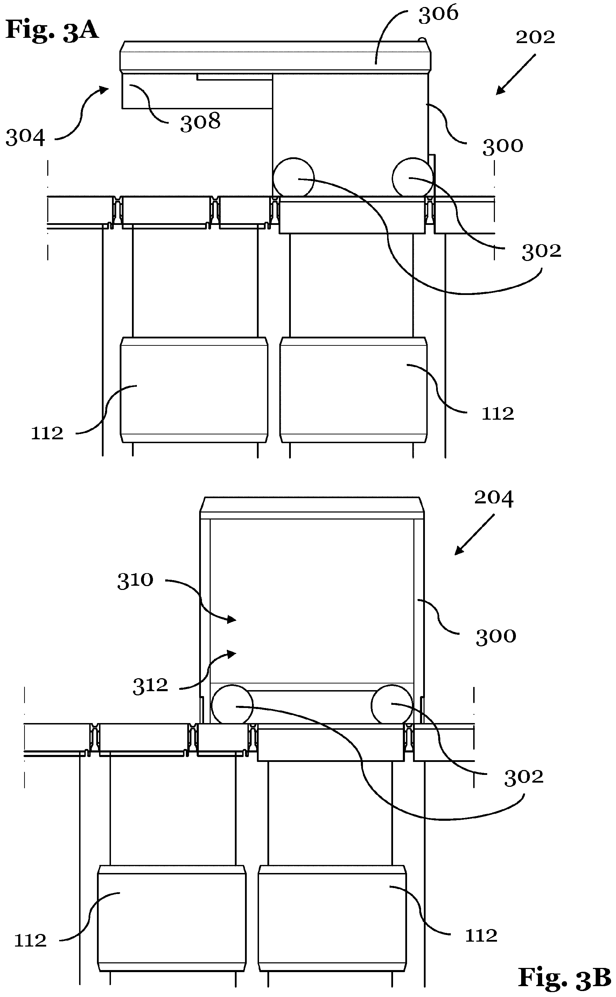

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

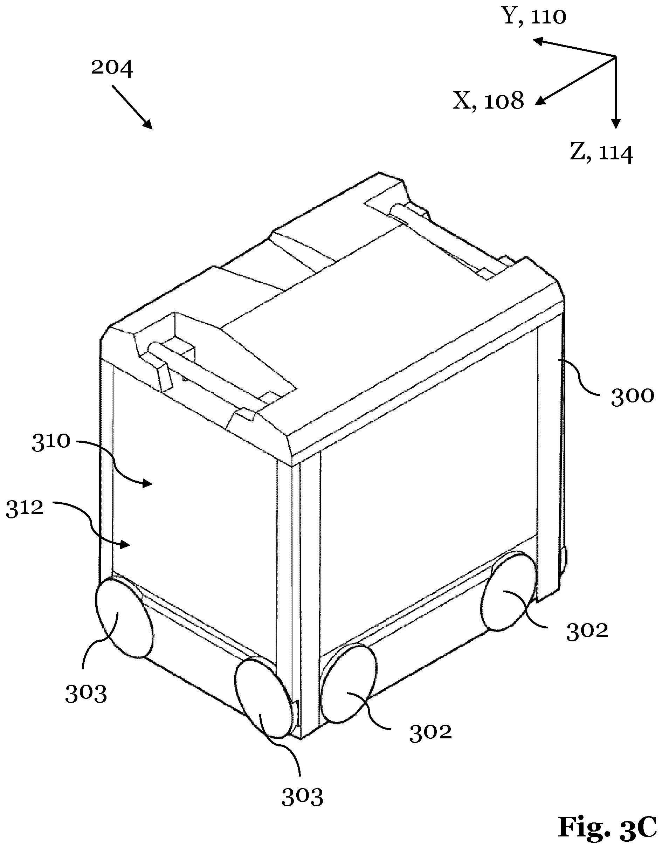

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

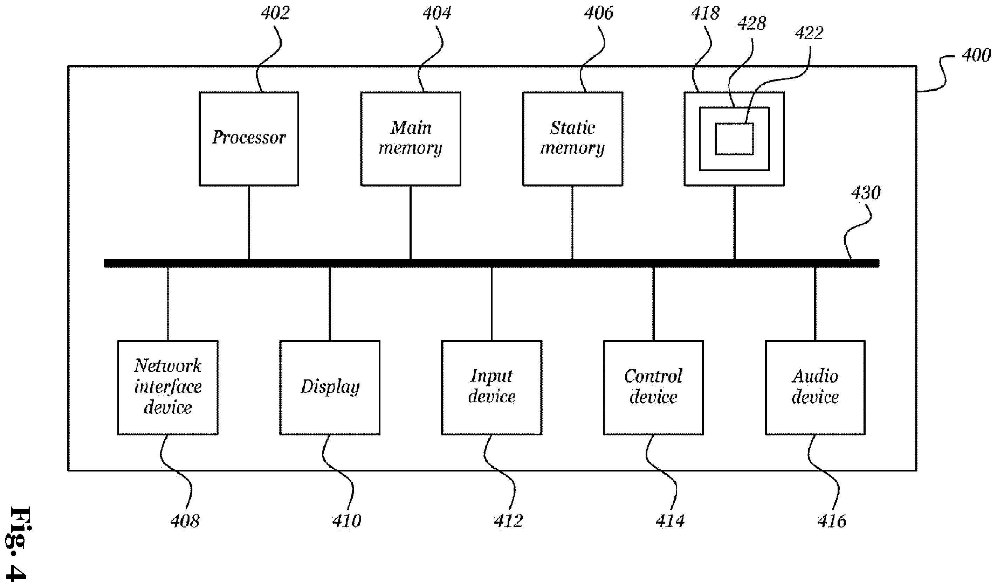

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a computer system or processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

In operation, each bin 112 is given a unique identifier, which may be marked on the bin 112 using a computer-readable identifier (e.g., a barcode, quick-response code or RFID tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned, if necessary, as discussed above.

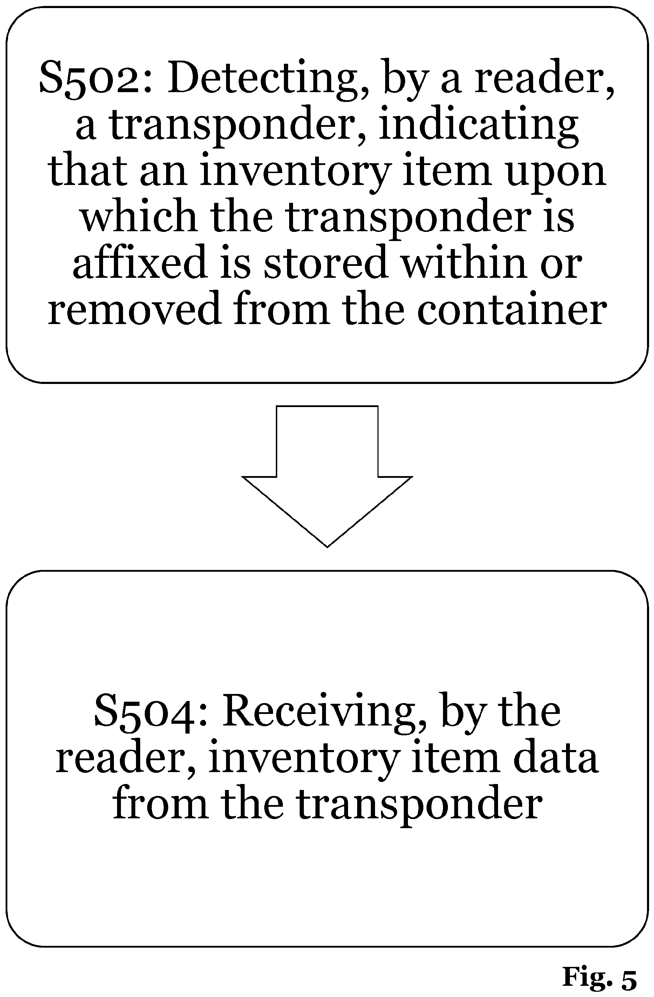

Fig. 5 shows a flowchart illustrating a first example method of monitoring inventory items stored within or removed from a stackable container of an automated storage and retrieval system, such as the automated storage and retrieval system of Fig. 1. The container comprises a reader. The reader is installed on or within the container. One or more inventory items comprise a transponder. Each transponder is affixed to (e.g., coupled with, or embedded in, or interfaced with, or integrated with) a respective inventory item. The reader is in wireless communication with one or more transponders, or more specifically, the reader is in wireless communication with a plurality of transponders, each affixed to a respective inventory item of a plurality of inventory items.

The method of Fig. 5 is carried out on at least one processing system, such as the processing system 400 of Fig. 4. The method of Fig. 5 may be carried out by a controller of the automated storage and retrieval system. The controller may be the same controller as the controller which is otherwise arranged to control operation of the automated storage and retrieval system, or a module thereof.

At a first step S502, the method comprises detecting (or identifying), by the reader, a transponder, indicating that an inventory item upon which the transponder is affixed is stored within or removed from the container. The transponder is within a predetermined range, or more specifically a predetermined distance, from the reader. The predetermined range from the reader may be described as a predetermined range of the reader. The predetermined range of the reader may be described as a maximum distance at which the reader can detect a transponder.

Before the first step S502, the method may comprise adjusting the predetermined range of the reader. For example, the predetermined range of the reader may be adjusted to correspond to the container, or more specifically, to correspond to a width, or a length, or a size, or an area of the container. The predetermined range of the reader may be adjusted by at least one of: changing a transmission power of the reader, replacing at least one first antenna of the reader (e.g., to a second antenna, the first antenna having a first gain and the second antenna having a second gain different from the first gain), and changing a position of the reader installed on or within the container.

At a second step S504, the method comprises receiving, by the reader, inventory item data from the transponder. The inventory item data is associated with the inventory item upon which the transponder is affixed. The transponder may comprise any suitable means for receiving an interrogation signal and, in response to receiving the interrogation signal, transmitting inventory item data to the reader. The interrogation signal may be received from the reader.

The transponder may be an RFID transponder within an RFID tag. The reader may comprise a corresponding RFID reader.

The transponder may additionally be arranged to identify the inventory item to which it is affixed. For instance, the inventory item data may comprise identification data associated with the inventory item. The identification data may comprise a batch number (or reference, or string), a serial number, an identification number, or a product number.

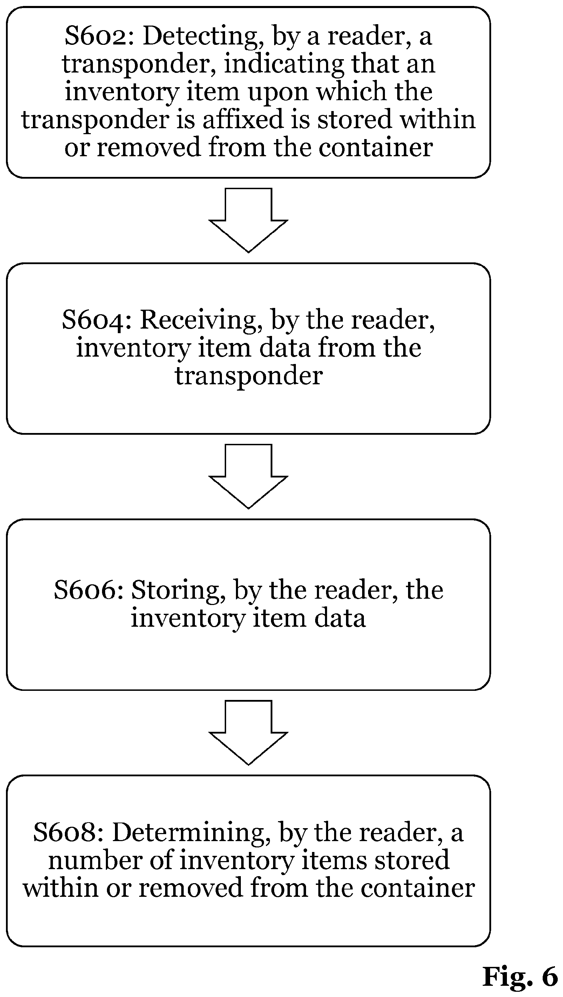

Fig. 6 shows a flowchart illustrating a second example method of monitoring inventory items stored within or removed from a stackable container of an automated storage and retrieval system, such as the automated storage and retrieval system of Fig. 1. The steps of the second example method is based on the method of Fig. 5.

At a first step S602, the method comprises the first step S502 of Fig. 5. At a second step S604, the method comprises the second step S504 of Fig. 5. The method of Fig. 6 may comprise any of the additional steps or features relating to Fig. 5.

At a third step S606, the method comprises storing, by the reader, the inventory item data. The reader may comprise a read-write memory (to store the inventory item data). The read-write memory may take any suitable form, such as any form of memory otherwise described herein.

At a fourth step S608, the method comprises determining or counting, by the reader, a number of inventory items stored within or removed from the container.

The reader may be coupled to a counter to determine the number of inventory items stored within or removed from the container. The reader may be coupled to the counter via the read-write memory of the reader. In this example, the method may further comprise counting, by the counter coupled to the reader, the number of inventory items stored within or removed from the container (to determine the number of inventory items stored within or removed from the container). The counter may be integrated with the reader.

The reader may comprise software to enable the reader to determine the number of inventory items stored within or removed from the container. In this example, the method may further comprise counting, by the reader, the number of inventory items stored within or removed from the container (to determine the number of inventory items stored within or removed from the container).

The method may further comprise increasing the number of inventory items stored within the container (e.g., by a count of 1) when the detected transponder is within the predetermined range from the reader indicating that an inventory item upon which the transponder is affixed is stored within the container. The method may further comprise decreasing the number of inventory items stored within the container (e.g., by a count of 1) when the detected transponder has exceeded the predetermined range from the reader indicating that an inventory item upon which the transponder is affixed is stored within the container.

Alternatively, the method may further comprise decreasing the number of inventory items removed from the container (e.g., by a count of 1) when the detected transponder is within the predetermined range from the reader indicating that an inventory item upon which the transponder is affixed is removed from the container. Alternatively, the method may further comprise increasing the number of inventory items removed from the container (e.g., by a count of 1) when the detected transponder has exceeded the predetermined range from the reader indicating that an inventory item upon which the transponder is affixed is removed from the container.

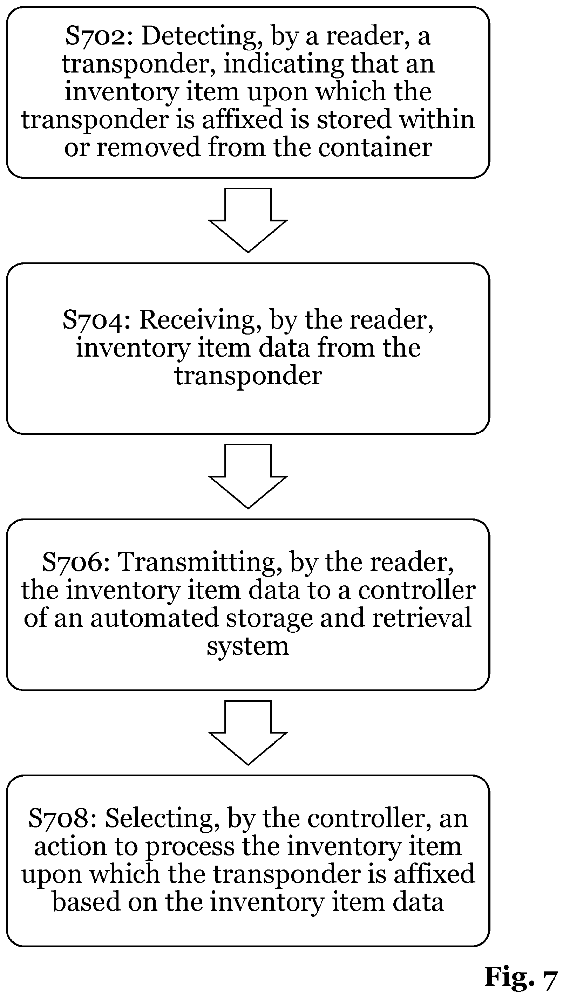

Fig. 7 shows a flowchart illustrating a third example method of monitoring inventory items stored within or removed from a stackable container of an automated storage and retrieval system, such as the automated storage and retrieval system of Fig. 1. The second example method is based on the method of Fig. 5.

At a first step S702, the method comprises the first step S502 of Fig. 5. At a second step S704, the method comprises the second step S704 of Fig. 5. The method of Fig. 6 may comprise any of the additional steps or features relating to Fig. 5.

Each of the steps and features relating to or described in relation to Fig. 6 and Fig. 7 may be combined in any way.

At a third step S706, the method comprises transmitting, by the reader, the inventory item data to the controller. The reader may comprise a wireless connection means to transmit the inventory item data to the controller.

In any example, the method may comprise transmitting, by the reader, the number of inventory items stored within or removed from the container to the controller. The reader may comprise a wireless connection means to the number of inventory items stored within or removed from the container to the controller.

The inventory item data may comprise any one or more of static data, temporal data, and environmental condition data.

Static data may comprise one or more of identification data and date data, such as expiry date data or manufacturing date data.

Temporal data may comprise an amount (or a period) of time. Temporal data may indicate an amount of time that the inventory item is stored within a container or an amount of time that the inventory item is stored externally or outside of a container, or not sorted within a container.

Environmental condition data may indicate an environmental condition of the container that the inventory item is stored within, or an environmental condition of the inventory item has endured when stored externally or outside of a container. Environmental condition may comprise one or more of a temperature of the container within which the inventory item is stored, a humidity of the container within which the inventory item is stored, a level of illumination of the container within which the inventory item is stored, and an atmospheric composition of the container within which the inventory item is stored.

Accordingly, when read, the transponder may transmit the identification data to the reader. The identification data may uniquely identify the inventory item upon which the associated transponder is affixed. The identification data may be associated with the container at an index at or accessible by the controller. Accordingly, when the identification data is transmitted to the controller by the reader, the controller may identify the inventory item by cross referencing the identification data against the index. In other examples, the reader may store approved identification data.

After the second step S704 and during the third step S706, the method may comprise transmitting, by the reader, the identification data to the controller of the automated storage and retrieval system. The method may further comprise identifying, by the reader or the controller, the inventory item upon which the transponder is affixed based on the identification data. The method may further comprise verifying, by the reader or the controller, that the identified inventory item is stored within a correct container, or that the identified inventory item is an approved inventory item. A correct container may describe a container within which the identified inventory item is scheduled or planned to be or can be stored within. An approved inventory item may describe an identified inventory item that is associated with approved identification data. Approved identification data may be described as data relating to inventory items that are scheduled or planned to be or can be stored within the container.

After the controller has received the transmitted inventory item data, the method may further comprise determining, by the controller, whether the inventory item data meets a threshold criterion. In particular, the threshold criterion may be manually or automatically input at the controller. The threshold criterion may take any suitable form, and may indicate whether the inventory item has, or is likely to have, spoiled or expired, or whether the inventory item is, or is likely to be, close to spoiling or of reduced quality.

In particular, the threshold criterion may comprise a range. The range may comprise a lower bound and an upper bound. The lower bound may have a first (or lower) threshold value and the upper bound may have a second (or upper) threshold value. The first threshold value may be lower than (or earlier than, or less than) the first threshold value. In other words, the second threshold value may be higher than (or later than, or more than) the first threshold value.

The threshold criterion may comprise a first threshold criterion having a first range and a second threshold criterion having a second range. The first range may comprise a lower bound having the first threshold value and an upper bound having the second threshold value. The second range may comprise a lower bound having a third threshold value and an upper bound having a fourth threshold value. The third threshold value may be lower than the fourth threshold value.

The second threshold value may be lower than the third threshold date. The first threshold value may be equal to (or the same as) or lower than the third threshold value, and the fourth threshold value may be lower than the second threshold value. The first threshold value may be lower than the third threshold value, and the fourth threshold value may be equal to or lower than the second threshold value.

At a fourth step S708, the method further comprises selecting, by the controller, an action to process the inventory item upon which the transponder is affixed based on the inventory item data. The controller may comprise information relating to the threshold criterion for a given inventory item based on the identification data of the inventory item.

The selected action may comprise picking, for removal from the automated storage and retrieval system, the inventory item (or first inventory item) if the inventory item data meets the first threshold criterion. Picking an inventory item for removal from the automated storage and retrieval system may be described as discarding or disposing of the inventory item, or picking the inventory item for disposal or to be discarded from the automated storage and retrieval system. This occurs when the inventory items meet criteria that indicating that the inventory items has spoiled, expired, or otherwise experienced conditions that are unacceptable for the given product and, for example, making the inventory item unstable or unusable. Hence, the first inventory items are disposed.

The selected action may comprise picking, for delivery from the automated storage and retrieval system, the inventory item (or second inventory item) if the inventory item data meets the second threshold criterion. The selected action may further comprise picking, for delivery from the automated storage and retrieval system, the inventory item (or third inventory item) if the inventory item data does not meet the first threshold criterion or the second threshold criterion. Picking an inventory item for delivery from the storage and retrieval system may be described as picking or selecting or packing the inventory item for delivery from the automated storage and retrieval system, and preferably packing the inventory item into a container arranged to be delivered or shipped (away) from the automated storage and retrieval system.

Inventory items having inventory item data that meets the second inventory item threshold criterion (otherwise described as second inventory items) are picked for delivery before inventory items having inventory item data that does not meet the first threshold criterion or the second threshold criterion (otherwise described as third inventory items). This is because the second inventory items may be older than, or expire earlier than, or have been in less desirable conditions than, or be likely to spoil sooner than, the third inventory items. Hence, it is logistically advantageous to deliver or pack the second inventory items before the third inventory items.

The controller may process inventory items in the following order of preference: inventory items that meet the first threshold criterion; inventory items that meet the second threshold criterion; and inventory items that do not meet the first threshold criterion or the second threshold criterion.

When the action is a first action, the controller may select a second action to process the inventory item upon which the transponder is affixed based on the inventory item data. For example, if an inventory item meets the second threshold criterion, the selected second action may comprise applying a discount to a cost of the inventory item or reducing a cost of the inventory item. This means that inventory items that may be older, or expire soon, or have been in undesirable conditions so as to effect the quality of the inventory item, or be likely to spoil sooner than, may be sold faster and a consumer may be less likely to be disappointed with the quality or expiry date of the inventory item due to the discounted or reduced cost of the inventory item.

The controller may select a third action to process the inventory item upon which the transponder is affixed based on the inventory item data. The third action may comprise instructing, by the controller, transportation of the inventory item to an inspection station. The instruction and transport of the inventory item is carried out by the robotic container handling vehicles, as otherwise described herein. The inventory item may be transported to the inspection station. The inspection station may comprise a port, such as any of the picking or packing ports described herein. At the port, a user may inspect the inventory item or access the container within which the inventory item is stored for inspection. Here, the user may inspect the inventory item or the contents of the container and determine that the inventory item(s) require replacement, at which point the user may reload or otherwise replace the inventory item(s) and then return the inventory item or container within which the inventory item is stored to the grid.

Alternatively, the user may remove the inventory item container from the automated storage and retrieval system. In an example, the user may inspect the container and determine that the container requires washing, at which point the user may remove the container from the storage system and then wash the container. Equally, the inspection station may be at a separate location to the port. For instance, the inspection station may be a washing station for washing the components of the storage system, such as the containers. As such, the containers may be washed without being removed from the storage system altogether and without increasing traffic to the port.

The third action may be described as a second action if the selected second action does not comprise applying a discount to a cost of the inventory item or reducing a cost of the inventory item. The third action in this case may comprise applying a discount to a cost of the inventory item or reducing a cost of the inventory item.

When the inventory item data is date data, the manufacturing date data may be based on a date or time that the inventory item was manufactured. The expiry date data may be based on a date or time that the inventory item will expire or has expired. In some examples, the first threshold criterion is a first date threshold criterion having a first date range, the first and second threshold values are first and second threshold dates, and the first date threshold criterion indicates that the date data is within the first date range. The first threshold date is earlier than the second threshold date. If the date data is an expiry date of the inventory item (or an expiry date associated with the inventory item upon which the transponder is affixed), the first threshold date is a manufacturing date of the inventory item (or a manufacturing date associated with the inventory item upon which the transponder is affixed), and the second threshold value is today's date (or the present date), then the first threshold criterion indicates that the expiry date is between the manufacturing date of the inventory item and, for example, today's date, if the inventory item meets the first threshold criterion. This would mean that the expiry date is in the past, hence the inventory item has expired. In this case, the selected action comprises picking the inventory item for removal from the automated storage and retrieval system.

If the second threshold value is a next available date on which the inventory item can be scheduled for delivery from the automated storage and retrieval system and the inventory item meets the first threshold criterion, this would mean that the inventory item will expire or is due to expire before the next available delivery date. Therefore, the inventory item will expire before delivery. In this case, the selected action comprises picking the inventory item for removal from the automated storage and retrieval system.

In some examples, the second threshold criterion is a second date threshold criterion having a second date range, the third and fourth threshold values are third and fourth threshold dates, and the second date threshold criterion indicates that the date data is beyond the first date range and within the second date range. The third threshold date is earlier than the fourth threshold date and the second threshold date is earlier than the third threshold date. Hence, the first threshold date is earlier than the second threshold date, the second threshold date earlier than the third threshold date, and the third threshold date is earlier than the fourth threshold date.

Using the example above, if the date data is beyond the first date range, the inventory item has not yet expired. The third threshold date may be, for example, the day after (or the day following) the second threshold date, or the next occurring date following the second threshold date. The fourth threshold date may be, for example, a date following the third threshold date, or a number of days after the third threshold date. Hence, if the date data meets the second threshold criterion, the expiry date is not in the past, but is within the time period from the day after the second threshold date to the fourth threshold date. This could mean that the expiry date is in the near future or the inventory item will expire in the number of days after the third threshold date. In this case, the selected action comprises picking the inventory item for delivery from the automated storage and retrieval system before inventory items having date data that does not meet the first date threshold criterion or the second date threshold criterion.

When the inventory item data is environmental condition data, the transponder may be coupled to an environmental condition sensor. In some examples, the environmental condition may include any suitable condition in the internal storage space of a container or within an environment external to or outside of a container. For instance, the inventory item may be sensitive or subject to, but is not limited to, changes in environmental condition, such as, temperature, humidity, level of illumination, or atmospheric conditions, e.g., an amount of one or more atmospheric gasses or compounds inside the container. Accordingly, the environmental condition data may comprise any collection of parameters reflecting one or more of the environmental conditions. As described in more detail herein, the environmental condition data may include any of multiple timestamped measurements for any parameter, a peak or trough value for any parameter, and/or an indication of whether any parameter meets a threshold criterion (e.g., since a previous reading, or since a reset). The indication of whether any parameter meets the threshold criterion may be binary, i.e., by indicating whether the parameter is beyond or within the range of the threshold criterion. In these examples, the threshold criterions may be described as environmental condition threshold criterions.

The environmental condition data may originate from an environmental condition sensor coupled to (e.g., affixed to, or embedded in, or interfaced with, or integrated with) the transponder. The environmental condition data is transmitted to a reader from a transponder coupled to the environmental condition sensor. The environmental condition sensor may measure any suitable parameters reflecting one or more of the environmental conditions experienced by or associated with the inventory item upon which the transponder is affixed.

The environmental condition sensor may comprise one or more of: a temperature sensor, a humidity meter such as a hygrometer, a lux sensor such as an illuminance sensor, at least one gas sensor for detecting the presence or quantity of gasses and/or any other suitable atmospheric sensor. In any examples, the environmental condition sensor may be modular and may include multiple modules for respectively measuring parameters reflecting an environmental condition.

By using the same transponder both to transmit an identification of the container and to transmit environmental condition data, methods of the present disclosure can improve utilisation of space in the storage system and can be easily carried out at storage systems by leveraging inventory item identification mechanisms of the storage system to monitor the environmental conditions. That is, additional readers for environmental condition monitoring need not be installed in the storage system on top of those readers for receiving inventory item identification information.

The environmental condition data may indicate a past environmental condition associated with an inventory item. Past environmental conditions are any historic environmental conditions, i.e., any environmental condition recorded or experienced by the environmental condition sensor prior to transmission by the transponder. In other words, when the environmental condition data indicates a past environmental condition, the environmental condition data does not solely include environmental conditions measured in association with the inventory item at the time of transmission. In these examples, the environmental condition data indicating the past environmental condition is recorded by the environmental condition sensor and may be stored at a location accessible by the transponder. Accordingly, at transmission, the transponder can access the environmental condition data and transmit the recording of the past environmental condition to the reader.

The transponder may therefore be coupled to an environmental condition sensor via a read-write memory. For instance, the read-write memory may be located at the environmental condition sensor or the transponder. Accordingly, the transponder may be an RFID transponder in an RFID tag containing a read-write memory. In these examples, the environmental condition sensor can write environmental condition data onto the read-write memory. Similarly, the transponder can read the environmental condition data from the read-write memory and transmit the environmental condition data to the reader. The read-write memory may take any suitable form, such as any form of memory otherwise described herein. The read-write memory may be a reserve memory or a user memory in an RFID tag. When the transponder is arranged to identify the inventory item upon which it is affixed, the read-write memory may additionally include the identification data, or the identification data may otherwise be provided in a tag identifier memory of the RFID tag.

In some examples, to save storage space in the read-write memory, the read-write memory may store peak and trough values (including local peak and trough values) for any parameter in the environmental condition data. Similarly, in some examples, to save storage space in the read-write memory, the read-write memory may store environmental condition data which meets a threshold criterion, such as any of the threshold criterions described herein, or an indication (e.g., a binary indication) that the environmental condition data meets a threshold criterion.

As an alternative to a computational memory, the read-write memory described here may be provided by a deformable element in, for instance, the transponder and/or the environmental condition sensor. Here, the deformable element may deform in response to the detection of a set environmental condition, such as a temperature above or below a set temperature, a humidity above or below a set humidity, or any set parameters of other environmental conditions described herein. The transponder may therefore be arranged to send a signal indicating whether the deformable element has deformed to the reader. Accordingly, by tuning or selecting the deformable element to deform when the environmental condition data meets the threshold criterion, a past environmental condition of whether the threshold criterion has been met may be recorded by the environmental condition sensor. Accordingly, in these examples, the transponder may transmit data indicating the past environmental condition by transmitting a binary indication of whether the threshold criterion has been met.

In an example, the first threshold criterion is a first environmental condition threshold criterion having a first environmental condition range, the first and second threshold values are first and second threshold environmental condition values, and the first environmental condition threshold criterion indicates that the environmental condition data is beyond the first environmental condition range. The first threshold environmental condition value is less than the second threshold environmental condition value.

An inventory item having environmental condition data that meets the first environmental condition threshold criterion may be removed from the automated storage and retrieval system because, e.g., a temperature of the inventory item cannot be more than a predetermined or specified temperature if the inventory item comprises, e.g., frozen goods or chilled medicine. An inventory item having environmental condition data that meets the first environmental condition threshold criterion may be removed from the automated storage and retrieval system because, e.g., a temperature of the inventory item cannot be lower than a predetermined or specified temperature if the inventory item comprises, e.g., warm goods.

If the inventory item is to be kept frozen, the environmental condition may be temperature (associated with the inventory item upon which the transponder is affixed), the first threshold criterion is a first temperature threshold criterion having a first temperature range. The inventory item may be stored between -18°C and -22°C to maintain quality of the inventory item and prolong a shelf life of the inventory item, but is stored between -10°C and -30°C to ensure the inventory item does not spoil, or is stable and usable, or has not experienced a temperature that is unacceptable for the inventory item. Hence, the first threshold temperature value is -30°C and the second threshold temperature value is -10°C. The first temperature threshold criterion indicates that the inventory item has experienced a temperature beyond the first temperature range of -10°C and -30°C. If the inventory item meets the first temperature threshold criterion, the inventory item has experienced a temperature that is higher or lower than the inventory item can experience to be picked for delivery. In this case, the selected action comprises picking the inventory item for removal from the automated storage and retrieval system.

In some examples, the second threshold criterion is a second environmental condition threshold criterion having a second environmental condition range, the third and fourth threshold values are third and fourth threshold environmental condition values, and the second environmental condition threshold criterion indicates that the environmental condition data is within the first environmental condition range and beyond the second environmental condition range. The third threshold environmental condition value is less than the fourth threshold environmental condition value.

The first threshold environmental condition value may be equal to or less than the third environmental condition threshold value, and the fourth environmental condition threshold value may be less than the second environmental condition threshold value. The first threshold environmental condition value may be less than the third threshold environmental condition value, and the fourth threshold environmental condition value may be equal to or less than the second threshold environmental condition value. In the cases where the threshold environmental condition value may be equal, the inventory items may experience no change in quality or safety as the environmental condition data changes until the threshold environmental condition value is reached that makes the inventory item unsafe, or unstable, or otherwise spoiled or unusable.

Using the example above, if the inventory item is within the first temperature range, the inventory item has not spoiled. The third threshold temperature is -22°C and the fourth threshold temperature is -18°C. Hence, if the temperature meets the second threshold criterion, the expiry date is not in the past, but is within the time period from the day after the second threshold date to the fourth threshold date. This could mean that the expiry date is in the near future or the inventory item will expire in the number of days after the third threshold date. In this case, the selected action comprises picking the inventory item for delivery from the automated storage and retrieval system before inventory items having date data that does not meet the first temperature threshold criterion or the second temperature threshold criterion.

In some examples, the inventory item may be considered to have, or likely to have been, or spoiled, if the environmental condition data suggests that a prescribed storage condition has failed, or the inventory item is likely to have decayed, or has begun to decay. Accordingly, the environmental condition threshold criterion may be met if the environmental condition data indicates that a prescribed storage condition in the container has failed, or the inventory item in the storage container is likely to have begun to decay. The prescribed storage condition may be stored at the controller. Accordingly, the determination of whether the environmental condition data has met the environmental condition threshold criterion may be carried out at the controller.

In some examples, the prescribed storage condition is considered failed if the prescribed storage condition has not been met while the container is stored in the automated storage and retrieval system. For instance, the prescribed storage condition may be that the inventory items are kept under a specific temperature (e.g., under 10°C for frozen goods).

When stored in the read-write memory, the environmental condition data indicating a past environmental condition may be timestamped using the temporal data. Accordingly, each entry in the environmental condition data may indicate a time at which the entry was recorded by the environmental condition sensor. This may be based on the indication of the amount of time that the inventory item is stored within a container or the amount of time that the inventory item is stored externally or outside of a container, or not sorted within a container. In these examples, a first environmental condition threshold criterion is met when the environmental condition data is beyond the first environmental condition range for a predetermined amount of time (or threshold time) based on the temporal data. Further in these examples, a second environmental condition threshold criterion is met when the environmental condition data is within the first environmental condition range and beyond the second environmental condition range for a predetermined amount of time (or threshold time) based on the temporal data.

For example, the predetermined amount of time may result in the inventory item becoming unusable or unstable. In another example, the environmental condition data of an inventory item may be beyond the first or second environmental condition range for a predetermined amount of time that does not result in the inventory item becoming unusable or unstable. In the latter example, the inventory item may be sold before inventory items that did not meet either of the environmental condition threshold criterions for any length of time, and/or may be of reduced quality.

When the controller determines whether the inventory item meets an environmental threshold criterion based on temporal data, a prescribed storage condition may be that the inventory items are kept under a specific temperature (e.g., under 10°C for frozen goods) and that the inventory items are not elevated above the specific temperature for greater than a predetermined amount of time. In this specific example, the prescribed storage condition would be considered failed if the goods are (i.e., if the internal storage space of the container is) elevated above the specific temperature for a predetermined amount of time, hence the related environmental condition threshold criterion is met.

The environmental condition data may indicate that inventory items in the storage container are likely to have begun to decay if the environmental condition data indicates the presence of, or beyond an environmental condition range of, an amount of decay biproducts in the atmospheric composition inside the container. With time, produce and foodstuffs begin to decay and spoil by, for instance, mould growth, decomposition or rotting. Such decay releases biproducts into the surrounding environment of the storage container. The biproducts may include propionic acid, lactic acid, methane, hydrogen sulphide and ammonia. If the environmental condition data suggests an increase in any decay biproducts the controller may determine that inventory items in the storage container are likely to have begun to decay.

Similarly, the environmental condition data may indicate that inventory items in the storage container are likely to have begun to decay if the environmental condition data indicates an increase in, or beyond an environmental condition range of, an amount of humidity inside the container. For instance, the increase in humidity may be attributed to spoiled produce. Equally, for certain inventory items, the environmental condition data may indicate that inventory items in the storage container are likely to have begun to decay if the environmental condition data indicates a decrease in, or beyond an environmental condition range of, the amount of humidity inside the container.

It should be appreciated that the conditions under which inventory items may have been, or likely to have been, spoiled described herein are exemplary. Other conditions may additionally or alternatively be considered. These other conditions depend in particular on the nature of the stored inventory items, their prescribed storage conditions and the consequence of their spoiling.

At least one of the temporal data and the environmental data may be received from the transponder when the inventory item is removed from the container or is detected by a reader external to the container.

As used herein, the threshold criterion may be a temperature threshold criterion, a humidity threshold criterion, an illumination threshold criterion, or an atmospheric composition threshold criterion.

The environmental condition data may include a single entry indicating that an environmental condition meets an environmental condition threshold criterion for a predetermined amount of time. The environmental condition threshold criterion of this example is particularly suitable for inventory items which can be held at an environmental condition higher or lower than the environmental condition range, but only for a limited amount of time.

The environmental condition threshold criterion may be considered to be met if the environmental condition data is read (e.g., by a reader) one or more times and the environmental condition threshold criterion is met more than once. The environmental condition threshold criterion of this example is particularly suitable for any examples where the environmental condition data does not include time stamps, where the environmental condition data does not necessarily include a past environmental condition and is therefore only read when interrogated by a reader, and/or where the environmental condition data is read on a regular schedule.

The environmental condition threshold criterion may be considered to be met if the environmental condition data is cycled between an upper bound and a lower bound of an environmental condition range at least a threshold number of times. This example is particularly suitable for inventory items which are degraded under exposure to environmental condition cycles (such as cycles between higher and lower temperatures). For instance, inventory items may be strained during expansion at higher temperatures, and contraction at lower temperatures. Here, each expansion-contraction cycle may strain the inventory items such that after the threshold number of cycles, the goods risk spoiling, or otherwise being damaged.

In some examples, inventory items stored in the container may be perishable goods, such as produce or other foodstuffs. Accordingly, the container may hold perishable goods when the container is stored in the automated storage and retrieval system. In these examples, the environmental condition threshold criterion may comprise at least one of a presence of a decay biproduct of the perishable goods, and/or an indication that the environmental condition previously failed a storage requirement for the perishable goods, as otherwise described herein.

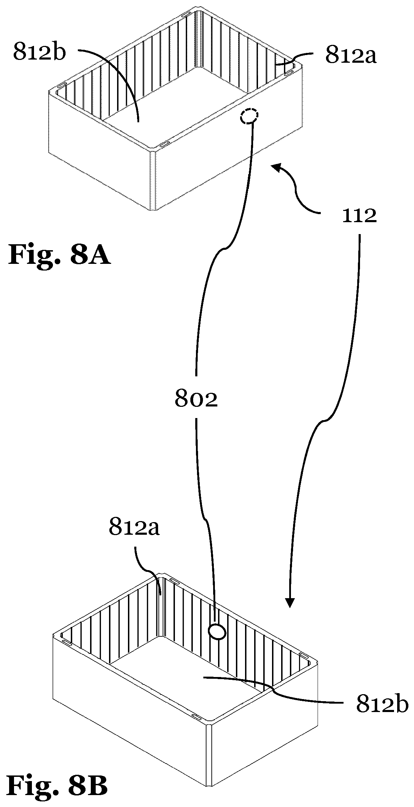

Figs. 8A-8B show a stackable container 112 for use within the methods of Figs. 5-7. The container 112 is for use in an automated storage and retrieval system, and in particular, the automated storage and retrieval system of Fig. 1. The container 112 is suitable for use in the methods described herein, particularly the methods of monitoring inventory items stored within or removed from the container 112 described with respect to Figs. 5-7. The container 112 may be as described with respect to Figs. 5-7.

As shown, the container 112 comprises a reader 802. The reader 802 is installed on or within the container 112. Accordingly, the reader 802 may be disposed on an inside of, or within a sidewall 812a of, the container 112, or an inside of, or within a base 812b of, the container 112.

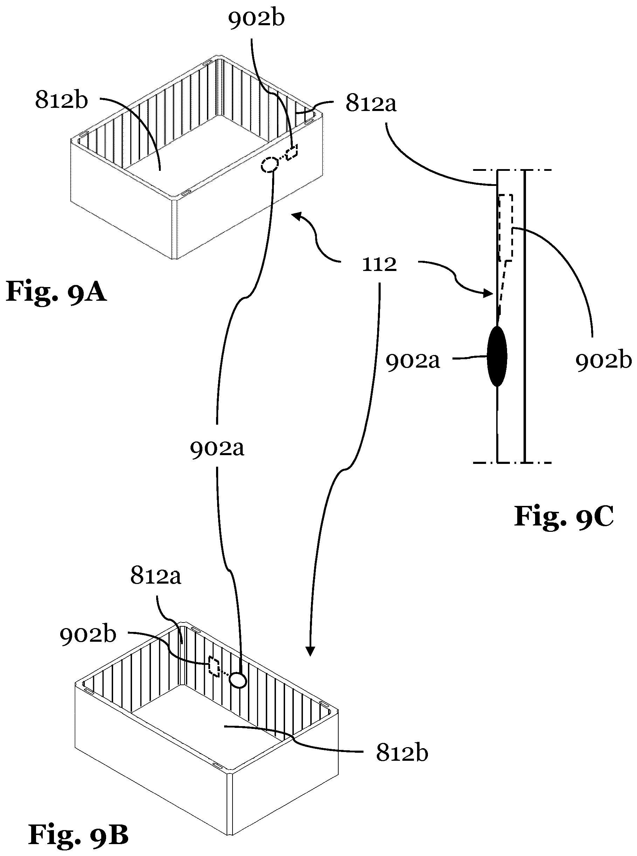

Turning to Figs. 9A-9C which show a stackable container 112 for use within the method of Fig. 6, the container 112 comprises a reader 902a and a counter 902b. The container 112 is for use in an automated storage and retrieval system, and in particular, the automated storage and retrieval system of Fig. 1. The container 112 is suitable for use in the methods described herein, particularly the methods of monitoring inventory items stored within or removed from the container 112 described with respect to Fig. 6. The container 112 may be as described with respect to Fig. 6. The features of the stackable containers 112 of Figs. 8A-8B and 9A-9C may be combined in any way.

As shown, the container 112 comprises the reader 902a. The reader 902a is installed on or within the container 112. Accordingly, the reader 902a may be disposed on an inside of, or within a sidewall 812a of, the container 112, or an inside of, or within a base 812b of, the container 112.

The counter 902b is installed on or within the container 112. Accordingly, the counter 902b may be disposed on an inside of, or within a sidewall 812a of, the container 112, or an inside of, or within a base 812b of, the container 112.

The reader 902a may be coupled to the counter 902b. The reader 902a may alternatively comprise the counter 902b. The counter 902b or reader 902a comprising the counter 902b may be configured to determine or count a number of inventory items stored within or removed from the container 112, as described with reference to Fig. 6.

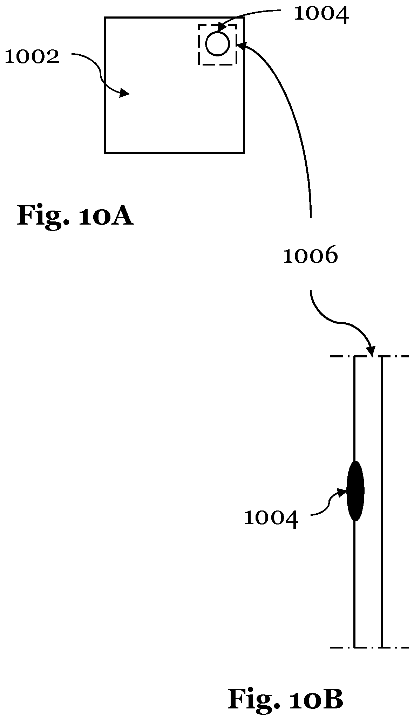

Figs. 10A-10B show an inventory item 1002 for use within the methods of Figs. 5-7. The inventory item 1002 is for use in an automated storage and retrieval system, and in particular, the automated storage and retrieval system of Fig. 1. The inventory item 1002 is suitable for use in the methods described herein, particularly the methods of monitoring inventory items 1002 stored within or removed from the container 112 described with respect to Figs. 5-7. The inventory item 1002 may be as described with respect to Figs. 5-7.

As shown, the inventory item 1002 comprises a transponder 1004. The transponder 1004 is affixed to (or installed on or within) the inventory item 1002. The transponder 1004 may be integrated within an RFID tag 1006.

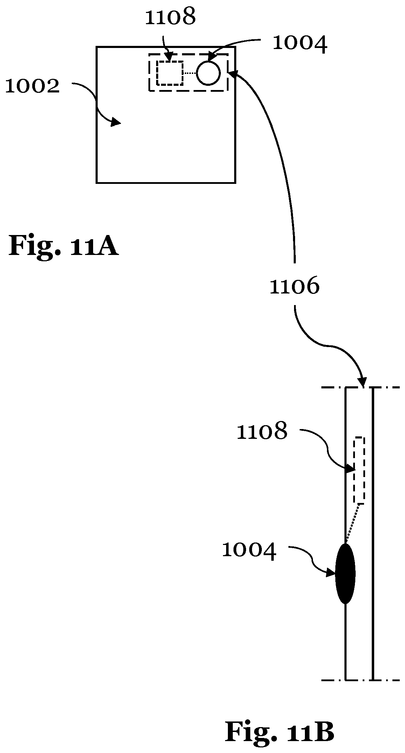

Figs. 11A-11B show an inventory item 1002 for use within the method of Fig. 7. The inventory item 1002 is for use in an automated storage and retrieval system, and in particular, the automated storage and retrieval system of Fig. 1. The inventory item 1002 is suitable for use in the methods described herein, particularly the methods of monitoring inventory items 1002 stored within or removed from the container 112 described with respect to Fig. 7. The inventory item 1002 may be as described with respect to Fig. 7. The features of the inventory items 1002 of Figs. 10A-10B and 11A-11B may be combined in any way.

The inventory item 1002 may comprise a sensor 1108 coupled to the transponder 1004. The sensor 1108 may be affixed to (or installed on or within) the inventory item 1002. The transponder 1004 may alternatively comprise the sensor 1108. The sensor 1008 may be integrated within the RFID tag 1106.

The sensor 1108 may comprise a timing means. The timing means may provide temporal data. The sensor 1108 may comprise an environmental condition sensor. The environmental condition sensor 1108 may comprise one or more of: a temperature sensor, a humidity meter such as a hygrometer, a lux sensor such as an illuminance sensor, at least one gas sensor for detecting the presence or quantity of gasses and/or any other suitable atmospheric sensor. In any example, the environmental condition sensor 1108 may be modular and may include multiple modules for respectively measuring parameters reflecting an environmental condition.

Referring to Figs. 8A-11B, the reader 802, 902a is configured to be in wireless communication with one or more transponders 1004 affixed to respective inventory items 1002. Hence, the reader 802, 902a is configured to detect a transponder 1004 within a predetermined range from the reader 802, 902a indicating that an inventory item 1002 upon which the transponder 1004 is affixed is stored within or removed from the container 112.

The reader 802, 902a is configured to receive inventory item data from the transponder 1004. The inventory item data is associated with the inventory item 1002 upon which the transponder 1004 is affixed.

The reader 802 is configured to transmit the inventory item data to a controller of the automated storage and retrieval system. The reader 802 is configured to transmit the inventory item data to a controller of the automated storage and retrieval system. The controller is configured to select an action to process the inventory item 1002 upon which the transponder 1004 is affixed based on the inventory item data in relation to Figs. 8A-8B and 11A-11B.

The reader 802 may be configured to store the inventory item data. The reader 802 may be configured to determine a number of inventory items stored within or removed from the container based on the indication that the inventory item is stored within or removed from the container.

The reader 902a is configured to store the inventory item data. The reader 902a is configured to determine a number of inventory items stored within or removed from the container based on the indication that the inventory item is stored within or removed from the container.

The reader 902a may be configured to transmit the inventory item data to a controller of the automated storage and retrieval system. The reader 902a may be configured to transmit the inventory item data to a controller of the automated storage and retrieval system. The controller may be configured to select an action to process the inventory item 1002 upon which the transponder 1004 is affixed based on the inventory item data in relation to Figs. 9A-9C and 10A-10B.

In any of the examples described herein, multiple storage containers (e.g., all of the storage containers) in the automated storage and retrieval system may comprise a reader. Each reader is preferably located at the same relative position on each storage container. In any of the examples described herein, multiple inventory items (e.g., all of the inventory items) in the automated storage and retrieval system may comprise a transponder. Here, each transponder is preferably located at the same relative position on each inventory item such that the same reader can easily read each transponder.

In any of the examples described herein, the reader and transponder may be based on a powered (i.e., active) reader and a passive transponder, an active reader and an active transponder (e.g., Bluetooth and some types of Near Field Communication (NFC)), or an active reader and a semi-passive transponder.

When the transponder is an RFID transponder within an RFID tag and the reader comprises an RFID reader, the RFID tag may be a passive RFID tag, a semi-passive RFID tag, or an active RFID tag, and the RFID reader may be an active RFID reader.

Examples of different communication means where a passive transponder and a powered reader are employed, which can be the reader and transponder described herein, include electromagnetic field systems including RFID and an NFC reader/writer.

It will be appreciated that the different electromagnet field systems have the following properties.

RFID is one method for Automatic Identification and Data Capture (AIDC). RFID readers uses electromagnetic fields or waves to automatically identify, detect, and/or track transponders affixed to inventory items. The transponders contain electronically stored information, i.e., inventory item data. Unlike a barcode, an RFID transponder can be indirectly detected by an RFID reader, i.e., outside of a line of sight of the RFID reader. The RFID transponder may be embedded in an inventory item.

An RFID reader comprises a power source (such as battery). A passive RFID tag collects energy from interrogating radio waves of a nearby RFID reader. In other words, passive RFID tags receive power from the RFID reader (or more specifically, the antenna of the RFID reader). An electromagnetic wave from the RFID reader induces a current in the passive RFID tag (or more specifically, the antenna of the passive RFID tag). A semi-passive RFID tag comprises a power source (such as a battery) to power circuitry and receives power for communication from the RFID reader (or more specifically, the antenna of the RFID reader) in the same way as a passive RFID tag. An active RFID tag comprises a power source (such as battery) and may operate hundreds of meters from the RFID reader. In any example, an RFID tag may comprise a chip, or integrated circuit.

In any example, the reader may comprise or may be coupled to a power source to power the reader, and the transponder may comprise or may be coupled to a power source to power the transponder or circuitry within the transponder. In any example, the reader may comprise or may be coupled to an antenna to detect the transponder and receive inventory item data from the transponder. In any example, the transponder may comprise or may be coupled to an antenna to detect the transponder and receive inventory item data from the transponder.

An NFC reader/writer enables NFC-enabled devices to read information stored on inexpensive NFC transponders embedded in transponders or smart posters. NFC standards cover communications protocols and data exchange formats and are based on existing RFID standards including ISO/IEC 14443 and FeliCa. The standards include ISO/IEC 18092 and those defined by the NFC Forum. NFC can be rooted in RFID which allows compatible hardware to both supply power to and communicate with an otherwise unpowered and passive electronic transponder using radio waves.

In any example, metallic plates or other means to shield interfering electromagnetic waves from neighbouring storage containers may be arranged around a transponder and/or reader to avoid disturbances.

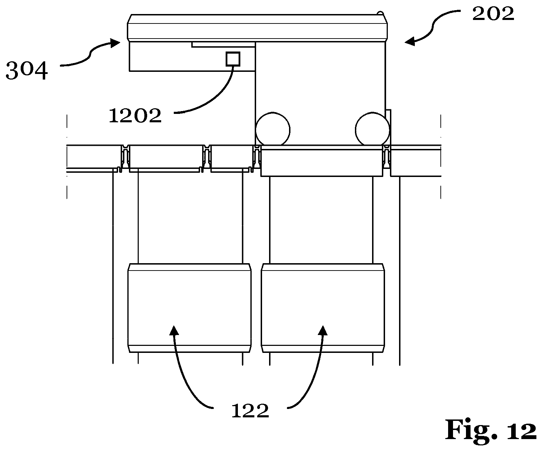

Fig. 12 shows a container-handling vehicle 202 comprising a reader 1202 for use within the method of Fig. 7 when the method comprises transmitting, by the reader, the inventory item data to a controller of the automated storage and retrieval system. The container-handling vehicle 122 may be any of the container-handling vehicles 122, 202, 204 described herein.

The reader 1202 is installed on a lifting device 304 of the container-handling vehicle 202. The reader 1202 may be disposed to read the inventory item data from a transponder 1004 affixed to an inventory item 1002 when the container-handling vehicle 202 engages (e.g., comes proximal to, contacts, grips. and/or lifts) the container 122 within which the inventory item 1002 is stored within. When installed on the container-handling vehicle 202, the reader 1202 may be powered by and signally connected to the onboard control and communications systems via cables. The cables may be arranged in a lifting band of the container-handling vehicle 202

A container 122 is shown beneath the lifting device 304. A container 122 is also shown beneath the container-handling vehicle 202.

When a gripping device of the lifting device 308 is lowered, the reader 1202 can be brought into proximity to and communication with the transponder 1004 affixed to the inventory item 1002 within the container 122. The robotic container-handling vehicle 202 shown in Fig. 12 is a cantilever type robot. Since the reader 1202 is disposed on the gripping device of the lifting device 308, the reader 1202 is said to be at a storage space of the container-handling vehicle 202.

The reader may be arranged at (e.g., inside or proximal to) a storage space of a container-handling vehicle, i.e., in a central cavity of an internal cavity type robot, inside a body of the vehicle or at a storage space arranged on the side of the body, e.g., for cantilever type robots. The reader may therefore be arranged at a position inside the cavity or body of the container-handling vehicle, e.g., in or on the side walls of the container-handling vehicle or in a top cover of the container-handling vehicle, preferably close to where the transponder affixed to an inventory item stored within the storage container is located when the storage container is lifted to the storage space of the container-handling vehicle.

Installing the reader in a container-handling vehicle can allow the inventory item data to be seamlessly and efficiently read during operation of the automated storage and retrieval system, without additionally routing the container about the storage system. In particular, during a digging operation, container-handling vehicles may engage many containers during sequentially lifting and repositioning of containers stored above the target bin. Accordingly, during these digging operations, each of the many containers are engaged and inventory item data can be read.

The reader may be installed at a port of the storage system. For instance, the reader may be arranged in the housing of the port, at a channel of the port through which containers can pass. Accordingly, as the containers pass through the channel, the reader may read the inventory item data from the transponder when the container-handling vehicle is transported to and through the port. Similarly, the reader may be arranged at a port column, e.g., within a frame element the storage system at the port column. Accordingly, the reader may read the inventory item data from the transponder when the container-handling vehicle is transported to the port through the port column. Installing the reader in the port or a port column can allow the inventory item data to be seamlessly and efficiently read during operation of the system during picking and packing, without additionally routing the container about the storage system.

The reader may be installed (or positioned or disposed) at any suitable position in the storage system. For instance (and without limitation), the reader 1202 may be installed on a robotic container-handling vehicle 202 as shown in Fig. 12, or the reader may be installed at a port or a port column, or the reader may be installed inside the frame or grid.

In these examples, the reader can communicate with a transponder in a container while the container is disposed in a storage column, without needing to lift the container. The reader can therefore quickly and easily communicate with the transponder and read the inventory data.

In these examples, the reader 602 installed on or within the container is a first reader 602. The system may comprise a second reader, installed on a robotic container-handling vehicle, at a port or a port column, or inside the frame, or within the grid. The method may further comprise, detecting, by the second reader, a transponder within a predetermined range from the second reader indicating that an inventory item upon which the transponder is affixed is stored within or removed from the container. The method may further comprise receiving, by the second reader, inventory item data from the transponder, wherein the inventory item data is associated with the inventory item upon which the transponder is affixed. The method may further comprise storing, by the second reader, the inventory item data. The method may further comprise transmitting, by the second reader, the inventory item data to the controller. The method may further comprise selecting, by the controller, an action to process the inventory item upon which the transponder is affixed based on the inventory item data read by the second reader.

The reader may therefore be in communication with the controller. As such, the reader may also be able to transmit data (such as the inventory item data) to the controller and optionally to receive instructions from the controller. Typically, the reader transmits the data via onboard control and communications systems of the vehicle, also referred to as the vehicle control system, which relays data to the controller. The controller may thus process the information from the transponder, as described with respect to Fig. 7. In some examples, the reader is modular, with a reading module for communicating with the transponder, and a relay module for communicating the data to the controller and/or the vehicle control system.

Aspects of the present disclosure are set out below. Each item below corresponds to an aspect of the disclosure, and each possible combination of any of the items corresponds to an aspect of the disclosure. When items are combined, two or more instances of an element with the same name are to be understood as referring to the same element, even if the element is introduced by the word "a" more than once. Each possible combination of any features from the items below with any features described above also forms part of the disclosure.
Aspect 1a. A computer implemented method of monitoring inventory items stored within or removed from a stackable container of an automated storage and retrieval system, wherein the container comprises a reader installed on or within the container, the method comprising:
   detecting, by the reader in wireless communication with one or more transponders affixed to respective inventory items, a transponder within a predetermined range from the reader indicating that an inventory item upon which the transponder is affixed is stored within or removed from the container; and
   receiving, by the reader, inventory item data from the transponder, wherein the inventory item data is associated with the inventory item upon which the transponder is affixed.
Aspect 1b. The computer implemented method of aspect 1a, further comprising storing, by the reader, the inventory item data.
Aspect 1c. The computer implemented method of aspect 1a or aspect 1b, further comprising determining, by the reader, a number of inventory items stored within or removed from the container based on the indication that the inventory item is stored within or removed from the container.
Aspect 1d. The computer implemented method of any one of the preceding aspects, further comprising transmitting, by the reader, the inventory item data to a controller of the automated storage and retrieval system, and
   optionally wherein the reader comprises a wireless connection means to transmit the inventory item data to the controller.
Aspect 1e. The computer implemented method of aspect 1d, further comprising selecting, by the controller, an action to process the inventory item upon which the transponder is affixed based on the inventory item data.
Aspect 2. The computer implemented method of any one of the preceding aspects, wherein the reader comprises a read-write memory to store the inventory item data.
Aspect 3. The computer implemented method of any one of the preceding aspects, when dependent on aspect 1c, wherein, to determine the number of inventory items stored within or removed from the container, the method further comprises counting, by a counter coupled to the reader, the number of inventory items stored within or removed from the container.
Aspect 4. The computer implemented method of aspect 3 when dependent on aspect 2, wherein the counter is coupled to the reader via the read-write memory.
Aspect 5. The computer implemented method of any one of aspects 1a to 2 when dependent on aspect 1c, wherein, to determine the number of inventory items stored within or removed from the container, the method further comprises counting, by the reader, the number of inventory items stored within or removed from the container.
Aspect 6. The computer implemented method of any one of the preceding aspects when dependent on aspect 1c, further comprising, when the detected transponder is within the predetermined range:
   increasing the number of inventory items stored within the container by 1; or
   decreasing the number of inventory items removed from the container by 1.
Aspect 7. The computer implemented method of any one of the preceding aspects when dependent on aspect 1c, further comprising, when the detected transponder has exceeded the predetermined range:
   decreasing the number of inventory items stored within the container by 1; or
   increasing the number of inventory items removed from the container by 1.
Aspect 8. The computer implemented method of any one of the preceding aspects, wherein the transponder is an RFID transponder within an RFID tag and the reader comprises an RFID reader, and optionally wherein the RFID tag is a passive RFID tag, or
   wherein the transponder is an RFID transponder within an RFID tag and the reader comprises an RFID reader, and optionally wherein the RFID tag is an active RFID tag.
Aspect 9. The computer implemented method of any one of the preceding aspects, wherein the reader comprises one or more of:
   a power source to power the reader; and
   an antenna to detect the transponder and receive inventory item data from the transponder.
Aspect 10. The computer implemented method of any one of the preceding aspects, further comprising transmitting, by the reader, the number of inventory items stored within or removed from the container to a controller of the automated storage and retrieval system, and
   optionally wherein the reader comprises a wireless connection means to transmit the number of inventory items stored within or removed from the container to the controller.
Aspect 11. The computer implemented method of any one of the preceding aspects, wherein the inventory item data comprises one or more of:
   static data;
   temporal data, the temporal data optionally indicating an amount of time that the inventory item is stored within a container; and
   environmental condition data, the environmental condition data optionally indicating an environmental condition, wherein the reader or the transponder is optionally coupled to an environmental condition sensor.
Aspect 12. The computer implemented method of any one of aspects 1e to 11 when dependent on aspect 1d, further comprising determining, by the controller, whether the inventory item data meets a threshold criterion,
   wherein the threshold criterion optionally comprises at least one of:
   a first threshold criterion having a first range, the first range comprising:
   a lower bound having a first threshold value; and
an upper bound having a second threshold value; and
a second threshold criterion having a second range, the second range comprising:
   a lower bound having a third threshold value; and
   an upper bound having a fourth threshold value.
Aspect 13. The computer implemented method of aspect 12, wherein the selected action comprises:
   picking, for removal from the automated storage and retrieval system, the inventory item if the inventory item data meets the first threshold criterion; or
   picking, for delivery from the automated storage and retrieval system, the inventory item if the inventory item data meets the second threshold criterion; or
   picking, for delivery from the automated storage and retrieval system, the inventory item if the inventory item data does not meet the first threshold criterion or the second threshold criterion, wherein inventory items having inventory item data that meets the second inventory item threshold criterion are picked before inventory items having inventory item data that does not meet the first threshold criterion or the second threshold criterion.
Aspect 14. The computer implemented method of aspect 11 or any one of aspects 12 to 13 when dependent on aspect 11, wherein the static data comprises one or more of: identification data; and date data, and
   optionally wherein the static data is received from the transponder when the inventory item is stored within the container.
Aspect 15. The computer implemented method of aspect 14, wherein the inventory item data comprises date data, and wherein:
   the first threshold criterion is a first date threshold criterion having a first date range;
   the first and second threshold values are first and second threshold dates, wherein the first threshold date is earlier than the second threshold date; and
   the first date threshold criterion indicates that the date data is within the first date range, and optionally wherein:
      the second threshold criterion is a second date threshold criterion having a second date range;
      the third and fourth threshold values are third and fourth threshold dates, wherein:
         the third threshold date is earlier than the fourth threshold date; and
         the second threshold date is earlier than the third threshold date; and
         the second date threshold criterion indicates that the date data is beyond the first date range and within the second date range.
Aspect 16. The computer implemented method of aspect 11 or any one of aspects 12 to 15 when dependent on aspect 11, wherein the transponder is coupled to an environmental condition sensor, and
   optionally wherein the environmental condition comprises one or more of:
   a temperature of the container within which the inventory item is stored;
   a humidity of the container within which the inventory item is stored;
   a level of illumination of the container within which the inventory item is stored; and
   an atmospheric composition of the container within which the inventory item is stored.
Aspect 17. The computer implemented method of aspect 16, wherein:
   the first threshold criterion is a first environmental condition threshold criterion having a first environmental condition range;
   the first and second threshold values are first and second threshold environmental condition values, wherein the first threshold environmental condition value is less than the second threshold environmental condition value; and
   the first environmental condition threshold criterion indicates that the environmental condition data is beyond the first environmental condition range, and
   optionally wherein:
      the second threshold criterion is a second environmental condition threshold criterion having a second environmental condition range;
      the third and fourth threshold values are third and fourth threshold environmental condition values, wherein:
         the third threshold environmental condition value is less than the fourth threshold environmental condition value; and
         the first threshold environmental condition value is equal to or less than the third environmental condition threshold value, and the fourth environmental condition threshold value is less than the second environmental condition threshold value, or
         the first threshold environmental condition value is less than the third threshold environmental condition value, and the fourth threshold environmental condition value is equal to or less than the second threshold environmental condition value; and
         the second environmental condition threshold criterion indicates that the environmental condition data is within the first environmental condition range and beyond the second environmental condition range.
Aspect 18. The computer implemented method of aspect 17, wherein the inventory item data further comprises temporal data indicating an amount of time that the inventory item is stored within a container, and
   wherein the first environmental condition threshold criterion is met when the environmental condition data is beyond the first environmental condition range for a predetermined amount of time based on the temporal data, and
   optionally wherein the second environmental condition threshold criterion is met when the environmental condition data is within the first environmental condition range and beyond the second environmental condition range for a predetermined amount of time based on the temporal data.
Aspect 19. The computer implemented method of any one of aspects 11 to 18, wherein at least one of the temporal data and the environmental data is received from the transponder when the inventory item is removed from the container.
Aspect 20. A computer-readable medium comprising instructions which, when executed by a processor of a computing system, cause the computing system to perform the computer implemented method of any one of the preceding aspects.
Aspect 21. A computing system for controlling an automated storage and retrieval system, the computing system comprising: one or more processors; and a memory in communication with the one or more processors, the memory storing instructions that when executed by the one or more processors cause the computing system to perform the computer implemented method of any one of aspects 1a to 19.
Aspect 22. A stackable container for an automated storage and retrieval system, the container comprising:
   a reader installed on or within the container, wherein the reader is in wireless communication with one or more transponders affixed to respective inventory items and is configured to:
   detect a transponder within a predetermined range from the reader indicating that an inventory item upon which the transponder is affixed is stored within or removed from the container; and
   receive inventory item data from the transponder, wherein the inventory item data is associated with the inventory item upon which the transponder is affixed.
Aspect 23. The stackable container of aspect 22, wherein the reader is further configured to store the inventory item data.
Aspect 24. The stackable container of aspect 22 or aspect 23, wherein the reader is further configured to determine a number of inventory items stored within or removed from the container based on the indication that the inventory item is stored within or removed from the container.
Aspect 25. The stackable container of any one of aspects 22 to 24, wherein the reader is further configured to transmit the inventory item data to a controller of the automated storage and retrieval system.
Aspect 26. The stackable container of aspect 25, wherein the controller is configured to select an action to process the inventory item upon which the transponder is affixed based on the inventory item data.
Aspect 27. The stackable container of any one of aspects 22 to 26, arranged for use in the method of any of aspects 1a to 18.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer implemented method of monitoring inventory items stored within or removed from a stackable container of an automated storage and retrieval system, wherein the stackable container comprises a reader installed on or within the container, the method comprising:
detecting, by the reader in wireless communication with one or more transponders affixed to respective inventory items, a transponder within a predetermined range from the reader indicating that an inventory item upon which the transponder is affixed is stored within or removed from the container;
receiving, by the reader, inventory item data from the transponder, wherein the inventory item data is associated with the inventory item upon which the transponder is affixed;
transmitting, by the reader, the inventory item data to a controller of the automated storage and retrieval system; and
selecting, by the controller, an action to process the inventory item upon which the transponder is affixed based on the inventory item data.

2. The computer implemented method of claim 1, further comprising determining, by the controller, whether the inventory item data meets a threshold criterion,
wherein the threshold criterion optionally comprises at least one of:
a first threshold criterion having a first range, the first range comprising:
a lower bound having a first threshold value; and
an upper bound having a second threshold value; and
a second threshold criterion having a second range, the second range comprising:
a lower bound having a third threshold value; and
an upper bound having a fourth threshold value.

3. The computer implemented method of claim 2, wherein the selected action comprises:
picking, for removal from the automated storage and retrieval system, the inventory item if the inventory item data meets the first threshold criterion; or
picking, for delivery from the automated storage and retrieval system, the inventory item if the inventory item data meets the second threshold criterion; or
picking, for delivery from the automated storage and retrieval system, the inventory item if the inventory item data does not meet the first threshold criterion or the second threshold criterion, wherein inventory items having inventory item data that meets the second inventory item threshold criterion are picked before inventory items having inventory item data that does not meet the first threshold criterion or the second threshold criterion.

4. The computer implemented method of any one of the preceding claims, wherein the inventory item data comprises static data, the static data comprising one or more of:
identification data; and
date data, and
optionally wherein the static data is received from the transponder when the inventory item is stored within the container.

5. The computer implemented method of claim 4 when dependent on claim 2 or claim 3, wherein the inventory item data comprises date data, and wherein:
the first threshold criterion is a first date threshold criterion having a first date range;
the first and second threshold values are first and second threshold dates, wherein the first threshold date is earlier than the second threshold date; and
the first date threshold criterion indicates that the date data is within the first date range, and optionally wherein:
the second threshold criterion is a second date threshold criterion having a second date range;
the third and fourth threshold values are third and fourth threshold dates, wherein:
the third threshold date is earlier than the fourth threshold date; and
the second threshold date is earlier than the third threshold date; and
the second date threshold criterion indicates that the date data is beyond the first date range and within the second date range.

6. The computer implemented method of any one of the preceding claims, wherein the inventory item data comprises environmental condition data indicating an environmental condition, wherein the transponder is coupled to an environmental condition sensor, and
optionally wherein the environmental condition comprises one or more of:
a temperature of the container within which the inventory item is stored;
a humidity of the container within which the inventory item is stored;
a level of illumination of the container within which the inventory item is stored; and
an atmospheric composition of the container within which the inventory item is stored.

7. The computer implemented method of claim 6 when dependent on claim 2 or claim 3, wherein:
the first threshold criterion is a first environmental condition threshold criterion having a first environmental condition range;
the first and second threshold values are first and second threshold environmental condition values, wherein the first threshold environmental condition value is less than the second threshold environmental condition value; and
the first environmental condition threshold criterion indicates that the environmental condition data is beyond the first environmental condition range, and
optionally wherein:
the second threshold criterion is a second environmental condition threshold criterion having a second environmental condition range;
the third and fourth threshold values are third and fourth threshold environmental condition values, wherein:
the third threshold environmental condition value is less than the fourth threshold environmental condition value; and
the first threshold environmental condition value is equal to or less than the third environmental condition threshold value, and the fourth environmental condition threshold value is less than the second environmental condition threshold value, or
the first threshold environmental condition value is less than the third threshold environmental condition value, and the fourth threshold environmental condition value is equal to or less than the second threshold environmental condition value; and
the second environmental condition threshold criterion indicates that the environmental condition data is within the first environmental condition range and beyond the second environmental condition range.

8. The computer implemented method of claim 7, wherein the inventory item data further comprises temporal data indicating an amount of time that the inventory item is stored within a container, and
wherein the first environmental condition threshold criterion is met when the environmental condition data is beyond the first environmental condition range for a predetermined amount of time based on the temporal data, and
optionally wherein the second environmental condition threshold criterion is met when the environmental condition data is within the first environmental condition range and beyond the second environmental condition range for a predetermined amount of time based on the temporal data.

9. The computer implemented method of any one of claims 5 to 8, wherein at least one of the temporal data and the environmental data is received from the transponder when the inventory item is removed from the container.

10. The computer implemented method of any one of the preceding claims, wherein the transponder is an RFID transponder within an RFID tag and the reader comprises an RFID reader, and optionally wherein the RFID tag is an active RFID tag.

11. The computer implemented method of any one of the preceding claims, wherein the reader comprises one or more of:
a power source to power the reader;
an antenna to detect the transponder and receive inventory item data from the transponder;
a read-write memory to store the inventory item data; and
a wireless connection means to transmit the inventory item data to the controller.

12. A computer-readable medium comprising instructions which, when executed by a processor of a computing system, cause the computing system to perform the computer implemented method of any one of the preceding claims.

13. A computing system for controlling an automated storage and retrieval system, the computing system comprising:
one or more processors; and
a memory in communication with the one or more processors, the memory storing instructions that when executed by the one or more processors cause the computing system to perform the computer implemented method of any of claims 1 to 11.

14. A stackable container for an automated storage and retrieval system, the stackable container comprising:
a reader installed on or within the container, wherein the reader is in wireless communication with one or more transponders affixed to respective inventory items and is configured to:
detect a transponder within a predetermined range from the reader indicating that the inventory item upon which the transponder is affixed is stored within or removed from the container;
receive inventory item data from the transponder, wherein the inventory item data is associated with the inventory item upon which the transponder is affixed; and
transmit the inventory item data to a controller of the automated storage and retrieval system,
wherein the controller is configured to select an action to process the inventory item upon which the transponder is affixed based on the inventory item data.

15. The stackable container of claim 14, arranged for use in the computer implemented method of any of claims 1 to 11.
